Europäisches Patentamt

European Patent Office

Office européen des brevets

(19)

(11) Publication number: **0 024 661**

**A1**

(12) # EUROPEAN PATENT APPLICATION

(21) Application number: **80104870.3**

(22) Date of filing: **16.08.80**

(51) Int. Cl.³: **G 05 F 1/64**

(30) Priority: **30.08.79 IT 2535879**

(43) Date of publication of application:
**11.03.81 Bulletin 81/10**

(84) Designated Contracting States:
**DE FR GB**

(71) Applicant: **Honeywell Information Systems Italia S.p.A.**
**Servizio Brevetti Honeywell Information Systems Italia**
**Via ai Laboratori Olivetti**
**I-20010 Pregnana Milanese (Milano)(IT)**

(72) Inventor: **Montorfano, Gianpaolo**
**Viale Sabotino 2**
**I-Milano 20135(IT)**

(54) **Enhanced protection power supply.**

(57) In a power supply for electronic equipments the auto-protection features are enhanced by using two separate reference voltage source generators.

A first generator (27) provides with a reference voltage a control circuit (3) which controls the output voltage of the power supply. A second generator (28) provides a reference voltage used by protection devices (29) to cause switching off of the power supply on intervention of the protection devices (undervoltage overvoltage · overcurrent).

A failure of any one of the two reference generators causes intervention of the protection devices (29).

In addition the first generator is provided with circuits which allow for a change of the nominal reference voltage to a reference voltage somehow higher or lower than the nominal reference voltage so that the output voltage from the power supply can be changed accordingly and enables the equipment fed by the lower supply to operate in marginal conditions due to undervoltage or overvoltage of the power supply.

Operation in marginal condition is useful for diagnostic purpose.

./...

FIG. 1

Enhanced protection power supply

The present invention relates to power supplies used in connection with data processing systems.

It is known that the data processing systems are made with logic circuits, manufactured with determinate circuital technologies and characterized for families.

Among the more utilized technologies there are for instance the so-called bipolar technologies of TTL type (Transistor Transistor Logic) and the MOS (Metal Oxide Semiconductor) technology.

It is similarly known that the logic circuits produced with such technologies require a DC supply voltage of relatively small value, while the necessity of supplying a great number of such circuits (approximately several thousands) requires high supply currents (in the order of the tenth to the hundreds of Ampere).

It is likewise known that, for working correctly, such logic circuits require constant supply voltages, free from noise and regulated with precision within very restricted ranges, beyond which the logic circuits are subjected to working faults or even to failures.

Therefore it is a long time since power supplies have been used which receive the alternate network voltage (220 V, 115 V), convert such voltage into one or several required continuous voltages of lower value (5V, 12V, 24V) and control accurately such voltage values.

Such power supplies are generally provided with protection devices which switch them off in case overvoltages, undervoltages or overcur- rents are detected; such protection devices are necessary both for preventing catastrophic failure effects in the power supply both for preventing possible failures and wrong working of the supplied circuits.

Since the protection devices operate by comparison of measured voltages and currents with a reference voltage obtained from suitable reference devices, the same reference voltage being used to control the output voltages of the power supply, there is the risk that a fault operation and the failure of such reference devices cause the rising of voltage and current conditions unacceptable for the correct operation of the logic circuits and that such conditions are not detected as the reference value allowing the detection drifts with such conditions.

According to a first aspect of the present invention, such inconvenience is avoided with a power supply where two different reference voltage generators are used, a first reference voltage generator being used for controlling the voltage provided by the power supply and a second reference voltage generator being used for activating the protection devices.

In this way, if one of the two generator fails, the other generator together with the comparison circuits provides an error signal which causes intervention of the protection devices.

For example, if the reference voltage generator used for control fails, the controlled output voltage of the power supply will be tending to assume values which go outside the allowable range limits determined by the reference voltage produced by the reference voltage generator used by the protection device, thus causing the intervention of such protection devices.

On the other side, if the reference voltage generator utilized by the protection devices fails, the intervention limit values move to such

values that the output voltage of the power supply, though controlled correctly, will find itself outside such limit values, thus causing the intervention of the protection devices.

According to another aspect of the present invention, the reference voltage generator, used for regulation purpose, is provided of means for changing in excess or in defect of a predetermined value such reference voltage, thus causing a predetermined variation of the regulated supply voltage.

In fact it is known that defective operations or failures may occur in intermittent way during the operation of the data processing equipments.

It is very difficult to identify such failures because the same failures may disappear during diagnostic identification routines or in case the operations, during which such failures have occurred, are repeated.

However it has been found that, very often, a change in the voltage supply, for which the voltage is brought to higher or lower values than normal ones, accentuates the steadiness of the failure and makes possible its identification.

Such operation, known as marginal testing, is generally utilized during the testing for determining the voltage range within which a logic equipment may work correctly; the same operation may be suitably used as an aid to diagnostic routines and is made possible by means of the circuits described with reference to the present invention.

According to the invention such changes, imposed to the supply voltage for diagnostic purpose, do not require changes of limit values imposed by the protection devices, so that the equipment is however protected and works in safety conditions during diagnostic operations too.

These and other features will appear more clearly from the following description of a preferred embodiment of the invention and from the attached drawings in which:

Figure 1 shows in block diagram a power supply in accordance with the present invention,

Figure 2 shows in detail some elements of the power supply of Figure 1, namely the auxiliary power supply and the two reference voltage generators,

Figure 3 shows in detail the logical control block used in the power supply of figure 1.

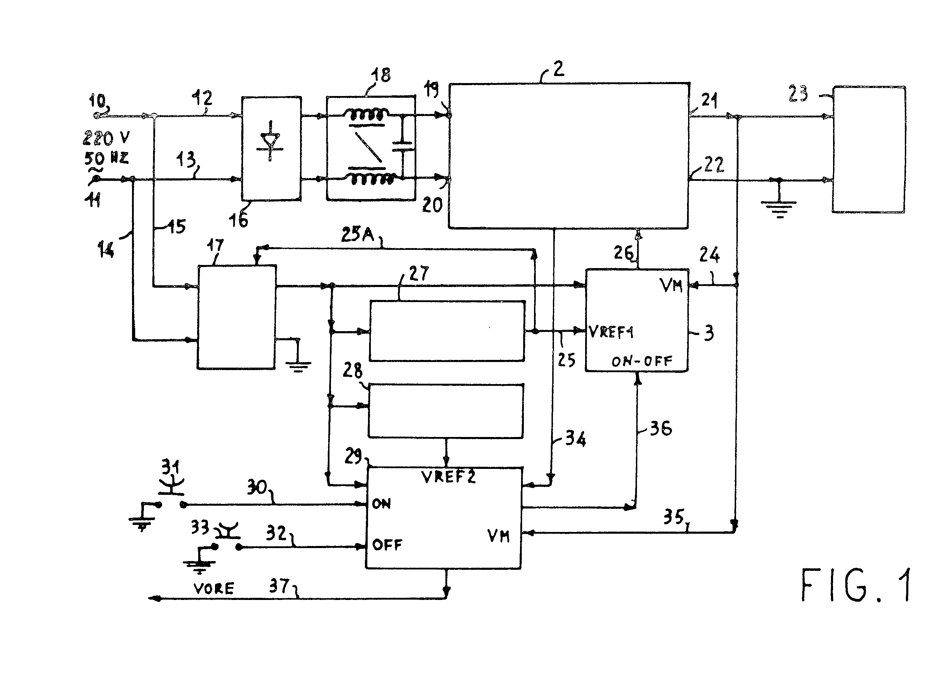

Considering figure 1 at first, it can be seen that the primary supply source, for example 220 V - 50 Hz, is applied to input terminals 10, 11 of the power supply and from here, through leads 12, 13, 14, 15, to a diode bridge 16 and to an auxiliary power supply block 17.

The pulsanting rectified voltage, in output from diode bridge 16, is filtered by a LC filter 18 and applied to inputs 19, 20 of a conversion block 2.

The conversion block may be suitably of the switching type, having an high switching frequency (about 20 KHz), as described for instance in U.S. Patent n. 4,055,790 assigned to Honeywell Information Systems Inc.

The conversion switching block comprises substantially a group of switch transistors, a step-down transformer and a output filter.

The transistor allow to apply intermittently to the transformer prima ry the continuous supply voltage received from terminals 19, 20, alternatively in one sense and in the other one.

The high frequency and low value alternating voltage induced into the secondary is filtered by the output filter and applied to load 23 through output terminals 21, 22.

The control of the output voltage on terminals 21, 22 is obtained by width modulation of the pulses applied to the primary by the switches.

The pulse width is carried out by a regulation block 3.

Regulation block 3 receives through lead 24 the measured voltage VM from the output of block 2 and compares it with a reference voltage VREF 1.

Regulation block 3 produces control pulses having a fixed frequency and a width which changes in function of the error detected between measured voltage VM and reference voltage VREF 1.

The control pulses are applied to conversion block 2 through lead 26. An auxiliary power supply 17, having a reduced output power, feeds the regulation block 3, a first reference voltage generator 27, a second reference voltage generator 28 and a logic control block 29 which control the switching on/switching off of the power supply.

Reference voltage VREF 1 is applied from generator 27, through lead 25, to regulation block 3 and, through lead 25 A, to the auxiliary power supply 17.

Reference voltage VREF 2 of generator 28 is applied to logic control block 29.

Logic control block 29 receives on lead 30 a switch on command ON obtained f instance by grounding lead 30 through a push button switch 31, on lead 32 a switch off signal OFF obtained for instance by groun ding lead 32 through a push button switch 33.

Further, logic block 29 receives, through lead 34, an elettrical signal proportional to the current fed to or delivered by conversion block 2 and, through lead 35, it receives the measured voltage VM at the output of the power supply.

Such voltages are compared within logical control block 29 with suita ble comparison voltages for securing that the measured values of voltage and current do not exceed some predetermined limits.

Moreover, logic control block 29 provides on output leads 36 and 37 respectively a command ON/OFF for switching off the power supply and a signal VORE for indicating that regulated voltage is present.

Signal ON/OFF is forwarded to regulation block 3, while signal VORE may be sent to a control panel for controlling the switching on of a display lamp indicating the power supply status.

The constructive details of conversion block 2 and of regulation block 3 may be found, for example, in the already cited U.S. Patent and in the extensive related literature, among which Application Note N. 122A (2/76) of february 1976, published by the firm TRW with the title "Design of a 5 Volt, 1000 Watt Power Supply", is specifically pointed out.

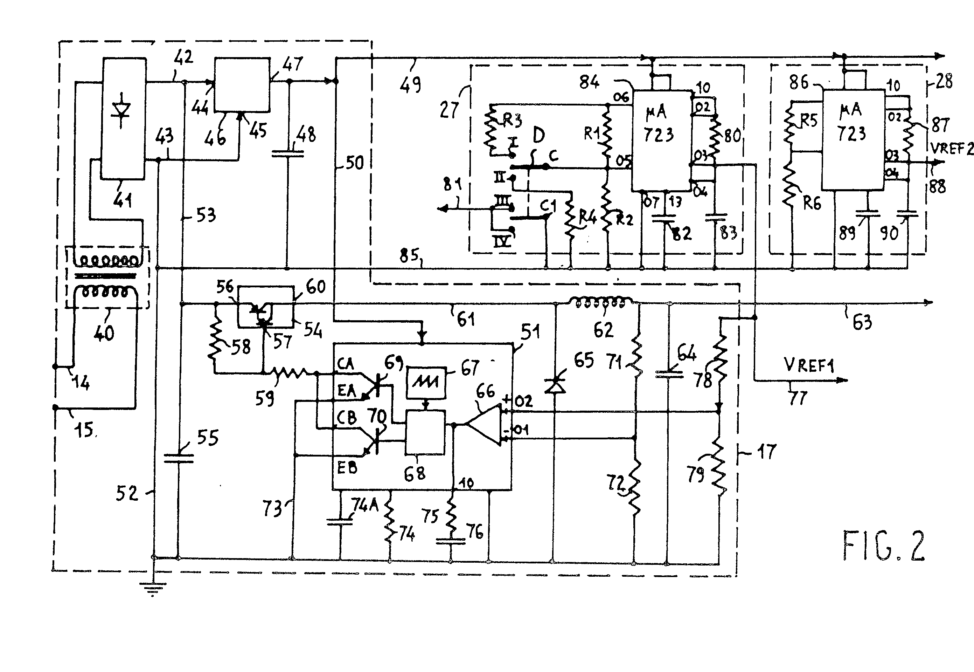

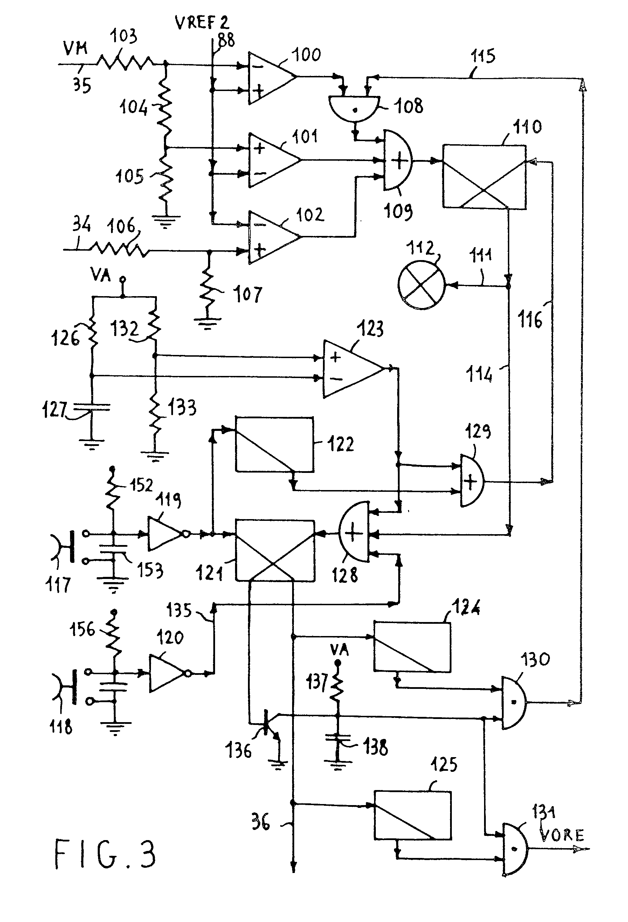

Since such constructive details are beyond the scope of the present invention, they are omitted while, with reference to figure 2, 3, a detailed description of auxiliary power supply 17, of two voltage generators 27 e 28 and of a logic control block 29 (in which is exactly located the invention ) is provided.

Referring to figure 2, the alternating network voltage is applied through leads 14, 15 to the primary of a step-down transformer 40.

The AC voltage at the secondary is rectified by a diode bridge 41.

The DC voltage at the output of the diode bridge is fed through leads 42, 43 to inputs 44, 45 of a first voltage regulator 46.

Such regulator, realized preferably in form of integrated circuit (and marketed for instance by the FAIRCHILD firm with code 7815), delivers between ground terminal 45 and output terminal 47 a regulated voltage of 15V.

A capacitor 48 is connected between terminal 47 and ground.

Terminal 47 is connected to a voltage lead 49 used for feeding the two blocks 27, 28 (reference voltage generators) and regulation block 3 (shown in fig. 1).

The voltage present on terminal 47 supplies moreover a voltage regulator circuit through lead 50.

Lead 43 is connected to ground through lead 52.

Lead 42 is connected through lead 53 to input 56 of a switching device 54.

A filter and storage capacitor 55 is connected between lead 53 and ground.

Switching device 54 consists preferably in a couple of transistors, connected between them in Darlington configuration.

The couple has an input 56.

A couple control terminal 57 is connected to input 56 through a resistor 58, as well as to two collector terminals CA and CB regulator circuit 51 through a resistor 59.

Output 60 of the switch device is connected through lead 61 to the input of a filtering inductor 62, whose output is connected to a line 63 which feed logic control block 29 (shown in fig. 1) of the power supply.

A recycle diode 65 is connected between lead 61, that is the input of inductance 62, and ground.

A filter storage capacitor 64 is connected between lead 63 and ground.

Switching device 54, regulator circuit 51, inductance 62 and capacitance 64, as well as diode 65, form a voltage regulation block of the so-called "single ended" type.

Regulator 51 controls intermittently, with fixed frequency, the switching on of switch 54 for variable time intervals, so that a charge current is intermittently sent through inductance 62 to capacitor 64.

Regulator 51 is preferably in the form of integrated circuit.

A preferred component for this purpose is marketed by SILICON GENERAL with code SG 3524.

The block diagram of such device is shown inside block 51.

The device comprises an error amplifier 66, a saw-tooth pulse generator oscillator 67, a comparator 68 and two output switching transistor 69, 70.

Error amplifier 66 receives to its inverting input 01 a measured voltage to be regulated, obtained by a voltage divider formed by two re
sistors 71, 72 series connected between lead 63 and ground.

Further, the error amplifier receives to its non-inverting input 02
a suitable reference voltage, obtained by a voltage divider formed by
two resistors 78, 79 series connected between a lead 77 and ground.
As it will be seen later, reference voltage VREF 1, obtained by refe-
rence voltage generator 27, is applied to lead 77.

Error amplifier 66 compares the voltages present on its inputs and ge
nerates an error signal which is applied to comparator circuit 68.

Comparator circuit 68 receives to a second input a saw-tooth signal
genrated by saw-tooth pulse generator oscillator 67.

Because of the comparison between such two signals, comparator 68 generates on its two outputs a sequence of positive control pulses with
frequency equal to the one of the saw-tooth pulses and with a duration
variable in function of the error signal.

Such pulses are applied to the base of switch transistors 69, 70 which
are caused to become conducting for the pulse length.

Collectors CA, CB of transistors 69, 70 are connected to a terminal of
resistor 59, while emitters EA, EB are connected to ground through
lead 73.

Therefore, since regulator 51 brings periodically in conduction transistors 69, 70, it connects periodically to ground resistor 59 and
brings the base potential (or control electrode voltage ) of device
54 to a level lower than the one present on the input electrode, so
that the Darlington transistor couple of the device is brought periodically in conduction.

The series of a suitable resistor 75 and of a capacitor 76, connected
between terminal 10 of regulator 51 and ground, introduces a suitable
frequency compensation for securing the operating stability of the re
gulator.

A suitable resistor 74 and capacitor 74A, both connected between suitable terminals of regulator 51 and ground, determine inside regulator 51, the cycling period of oscillator 67.

The regulated voltage, produced by auxiliary power supply 17, is supplied through lead 63 to logic control block 29 which controls the switching on/switching off operations of the main power supply, such block comprising the protection circuits.

As already said, a second regulated voltage, produced by auxiliary power supply 17, feeds through lead 49 the reference voltage generators 27, 28 and the regulation block (fig. 1).

The reference voltage generator 27 is now considered.

Such generator substantially comprises an integrated circuit 84 marketed by the FAIRCHILD firm with code $\mu$A723.

The constructive and operative details of such circuit are not considered.

They may be deduced from the manufacturer's technical data (Linear Integrated Circuit Data Book - $\mu$A - Linear, pag. 14-21/44 Copyright Fairchild 1976).

It is only noted that such circuit comprises a generator of fixed reference voltage equal to about 7 V which is available on a terminal 06, a voltage regulator and suitable circuits for output current limitation and for frequency compensation used for stabilization of the device operation.

Through a voltage divider which connects terminal 06 to ground, externally to the device, it is possible to apply to an input terminal 05 a portion of the internal reference voltage, obtaining on output terminal 10 a regulated reference voltage of desired value.

Such voltage is directly applied to terminal 02 of a limiting current circuit and, through a resistor 80, external to the device, to two terminals 03, 04 which are respectively two detecting inputs for delivered current and delivered voltage.

Terminal 04 is connected to lead 77 and provides the required reference voltage.

Such voltage is used as reference by control block 3 (fig. 1) so that the voltages produced by the power supply at the output of conversion block 2 have a predetermined value relative to the reference voltage.

According to an aspect of the invention, the voltage (or the voltages) produces by the power supply may be changed of some percentage in excess or default from the nominal value for imposing an operation of the equipments fed by the power supply in marginal conditions.

This is obtained as follows.

The voltage divider, determining the value of the reference voltage applied to reference voltage generator 27, is not fixed, but it is formed by a set of resistors which may be differently connected among them.

The voltage divider comprises a resistor $R_1$ connected between terminal 06 and 05, a resistor $R_2$ connected between terminal 05 and ground, a resistor $R_3$ connected between terminal 06 and a terminal I of a three position switch D, a resistor $R_4$ connected between ground and a terminal II of three position switch D.

The common terminal C of the switch is connected to terminal 05.

In normal operating conditions switch D is in middle position and the voltage divider is formed by the series of resistors $R_1$, $R_2$, whilst $R_3$, $R_4$, are disconnected.

In a first position for marginal operation switch D connectes common terminal C to terminal I and the voltage divider is formed by two resistors $R_1$, $R_3$ in parallel and by the resistor $R_2$ in series.

In a second position for marginal operation switch D connects common terminal D to terminal II and the voltage divider is formed by resistor $R_1$ in series with the parallel of two resistors $R_2$, $R_4$.

In such way the reference voltage applied to terminal 05 may assume three values: an intermediate value which determines a normal output voltage of the power supply and two values, respectively in excess and in defect, which determine an output voltage of the power supply respectively above which determine an output voltage of the power supply respectively above and below the normal value and correspond to marginal operating conditions.

Switch D may be actuated by hand or by remote control, if this is preferred.

In figure 2 switch D is doubled and comprises a second section whose common terminal $C_1$ is connected to ground and whose terminals III and IV are connected to lead 81.

When switch D is in one of the two positions corresponding to the marginal operating conditions, lead 81 is connected to ground and may provide, with an indication related to such conditions, suitable signaling means (not shown) connected to lead 81 and placed, for instance, on an operator or maintenance panel.

Block 27 is completed by suitable capacitors such as 82 and 83, connected between suitable terminals of device 84 and ground. Such capacitors secure a suitable frequency compensation.

The supply of circuit 27 is obtained by means of connections to voltage lead 49 and to ground lead 85.

According to another aspect of the invention, the power supply object of the invention comprises a second reference voltage generator 28.

Such circuit comprises an integrated circuit 86 identical to circuit 84 (that is preferably the circuit µA723 produced by FAIRCHILD firm) and suitable bias resistances and frequency compensation capacitances.

Two resistors $R_5$, $R_6$ are series connected between terminal 06 and ground.

The common point of two resistors $R_5$ and $R_6$ is connected to terminal 05.

Therefore, a suitable portion of the internal reference voltage of circuit 86, available on terminal 06, is applied to terminal 05, such portion being imposed by the voltage divider.

Terminals 10 and 02 are connected between them and to reference voltage output lead 88 through a resistor 87 having the function of load detector.

Lead 88 is connected in its turn to terminals 03, 04 of circuit 86. Capacitors 89, 90, connected respectively between terminals 13 and 04 of circuit 86, secure a suitable frequency stabilization.

Fixed reference voltage VREF 2, available on lead 88, is sent to suitable protection circuits of block 29 (fig. 1) and used by such circuits as fixed reference voltage.

Variable reference voltage VREF 1, available on lead 77, is sent to regulation block 3 (fig. 1 ) of the power supply and used as voltage reference in such block.

Fig. 3 shows in greater detail logic control block 29.

Logic control block 29 comprises some protection circuits and a control logic for switching on /switching off of the power supply.

The protection circuits consist in three comparator circuits 100, 101, 102 used respectively for detecting undervoltage, overvoltage and overcurrent of the power supply.

Comparators 101, 102 receive on their inverting input through lead 88 reference voltage VREF 2 produced by generator 28.

Comparator 100 receives the same reference voltage on its direct input. As previously said, reference voltage VREF 2 is fixed and indipendent of reference voltage VREF 1 used for the voltage regulation of the power supply.

Measured voltage VM, produced by the power supply, is applied through

lead 35 to a voltage divider formed by three resistors 103, 104, 105 in series.

Resistor 103 has terminal connected to lead 35 and the other terminal, common to resistor 104, connected to inverting input of comparator 100.

Resistor 104 has the terminal common to resistor 105 connected to the direct input of comparator 101.

The other terminal of resistor 105 is connected to ground.

The value of resistors 103, 104, 105 is suitably selected in such a way as to define the allowable range of measured voltage VM round the reference value imposed by reference voltage VREF 1.

A voltage signal, proportional to the current delivered by the power supply, is applied through lead 34 to a voltage divider formed by two resistors 106, 107 connected in series between lead 34 and ground.

The intermediate point of the voltage divider is connected to the non-inverting input of comparator 102.

The output of comparator 100 is connected to an input of a two input AND gate 108.

The outputs of AND gate 108, of comparator 101 and of comparator 102 are respectively connected to as many inputs of an OR gate 109, whose output is connected to the SET input of a RS flip-flop 110.

The operation of circuit is the following.

As long as the voltage produced by the power supply keeps within the allowable limits and the current delivered by the power supply keeps below the maximum allowable value, the outputs of the comparators are at low electrical/logic level.

Therefore, signals at logical level 0 are present on the inputs of OR gate 109 and its output is at logical level 0.

If the voltage produced by the power supply is beyond one of the allowable limits, at least one of the comparators raises its output to lo gical level 1 and the output of OR gate 109 raises to logical level 1, thus setting flip-flop 110.

The direct output of flip-flop 110 is connected through lead 111 to suitable signaling and alarm devices and through lead 114 to the switching on/switching off logic of the power supply.

In order to avoid the intervention of the undervoltage protection (comparator 101) at the switching on of the power supply, when the regulated and measured voltage VM has not yet reached a level such as to be comprised within the allowable limits, an enabling signal at logic level 1 is applied to AND gate 108 through lead 115 only after a certain time interval from the instant in which a switching on command is sent to the control block.

Flip-flop 110 is reset by a signal at logic level 1 applied to its reset input through lead 116.

The switching on/switching off logic comprises substantially two push buttons switches 117, 118 respectively for switching on/switching off the power supply, two inverters 119, 120, a RS fli-flop 121, three monostable oscillators 122, 124, 125, two OR gates 128, 129, two AND gates 130, 131, a comparator 123, an RC network formed by a resistor 126 and a capacitor 127, a voltage divider formed by two series connected resistors 132, 133, a transistor 136 and a second RC network formed by a resistor 137 and a capacitor 138.

One terminal of resistor 126 is connected to the auxiliary supply source VA (lead 63 of fig. 2 ).

The other terminal of resistor 126 is connected to the inverting input of comparator 123, as well as to ground through capacitor 127.

The voltage divider formed by resistors 132, 133 is connected between auxiliary supply source VA and ground.

The intermediate point of such divider, common to resistors 132 and 133, is connected to the direct input of comparator 123.

The output of comparator 123 is connected to an input of the two input OR gate 129 and to an input of the three input OR gate 128. The output of OR gate 129 is connected to lead 116 and the output of OR gate 128 is connected to the reset input of flip-flop 121.

All the circuits of logic block 29, shown in figure 3, are fed with the auxiliary voltage present on lead 63 (figure 2), which is established when the power supply is connected to the network. During the establishing of the voltage supply, flip-flops 110, 121 could go to an indefinite state and therefore it is necessary to assure that they are reset.

Such reset state is provided by means of resistors 126, 132, 133 and by means of capacitor 127, which apply initially, during the building up of the feeding voltage, an higher voltage to the direct input of comparator 123 as compared with the one applied to the inverting input, whilst, because of capacitor 127, the situation is inverted after a certain time and precisely when the auxiliary supply voltage has reached a sufficient value for granting the correct working of the logic circuits of block 29.

During all such initial time interval comparator 123 provides on its output a signal at logic level 1 which is transmitted through OR gates 129, 128 to reset inputs of flip-flop 110, 121 respectively, securing the reset state of such flip-flops.

The effective switching on of the power supply, that is the activation of regulation block 3 and of conversion block 2 (figure 1), occurs later for actuation of push button 117.

Push button 117 grounds the input of inverter 119, kept normally at logic level 1 by resistor 152 connected to auxiliary supply voltage VA. A capacitor 153, connected between the push button contacts, avoids possible ringing arising from the push button operation.

The output of inverter 119 is connected to the set input of flip-flop 121 and to the active input of oscillator 122.

Actuation of push button 117 causes the output of inverter 119 to rise to logic/electric level 1, thus setting flip-flop 121 and starting monostable oscillator 122 which provides on its output a positive pulse.

Such pulse is applied through lead 134 to an input of OR gate 129 and from here to lead 116; it reconfirm or replaces (according to the cases) in reset flip-flop 110.

Filp-flop 121, when set, produces on its direct output, connected to lead 36, a positive logic level signal which activates regulation block 3 and, through such last, the conversion block 2.

Flip-flop 121 is reset (that is it deactivates the control block 2) by three signals through OR gate 128.

As already seen, a reset signal is received by the output of comparator 123.

A second signal is received through lead 114 by the direct output of flip-flop 110 (which is set in case of detected overvoltage/undervoltage, overcurrent).

A third signal is received through lead 135 and NOT 120 by push button switch 118 when such last is actuated and grounds the input of NOT 120, which is normally kept at positive level by resistor 156 connected to auxiliary voltage source VA.

As already mentioned, when the power supply is switched on, the voltage produced by it rises gradually till it reaches the regulated value. During such initial interval the action of comparator 100 must be masked.

To this purpose the direct output of flip-flop 121 is connected to the input of a monostable oscillator 124, as well as to lead 36.

The inverted output of flip-flop 121 is connected to the base of transistor 136.

The collector of transistor 136 is connected to auxiliary voltage source VA through resistor 137.

Moreover, a capacitor 138 is connected between such collector and ground.

The collector of transistor 136 and the inverted output of monostable oscillator 124 are further connected to the inputs of AND gate 130, whose output, as can be easily concluded, rises to electrical level 1 with a certain delay relative to the beginning of the switch/on command, such delay being imposed by monostable oscillator 124.

Only after such delay the output of AND gate 130 enables through AND gate 108 the possible operation of comparator 100, allowing the power supply adequate time for producing a voltage regulated within the allowable limits.

The delay network, formed by resistor 137, by capacitor 138 and by transistor 136, is used for masking the action of comparator 100, before the switch/on command and for a brief time interval after the switching on command, giving to monostable oscillator 124 time for intervening with its masking action.

A similar circuit is formed by monostable oscillator 125 and by AND gate 131 with an input connected to the inverted output of monostable oscillator 125 and with a second input connected to the collector of transistor 136.

Such circuit generates on lead 37 a present regulated voltage signal VORE with a suitable delay relative to the switch/on.

It is to be noted that, when switching off the power supply, capacitor 138 discharges through transistor 136 and the action of comparator 100 is again masked, thus inhibiting the intervention of the undervoltage protection during the switching off, when it is normal that the voltage decreases under the allowable limits till it sets at zero.

By the preceding description the features of the invention are made clear.

The described power supply contains two different reference voltage generators: a first generator which produces a reference voltage VREF 1 used only as reference voltage for controlling the output voltage of the power supply, a second generator which produces a reference voltage VREF 2 used only as reference voltage for the protection devices.

If for any reason, included the failure of the first reference voltage generator, the voltage delivered by the power supply goes beyond the allowable limits imposed by the protection devices, the operation of such devices is caused.

If the second generator fails, the protection devices detect an excessive divergence between the properly regulated voltage and the reference value of the protection devices which intervene.

Besides, the control reference voltage generator comprises devices for changing its output voltage and allows to impose to the power supply a diagnostic operative state during which the produced voltage is intentionally different from the nominal one, even though it is maintained within the limits imposed by the protection devices limits which are not effected by the diagnostic state.

Claims

1. A power supply comprising a conversion block (2) for converting a first input supply voltage into a second output regulated voltage, a first reference voltage generator (27), a control circuit (3) for controlling said conversion block, said control circuit receiving a reference voltage from said first generator and an output regulated voltage from said conversion block and providing said conversion block with control and command signals, characterized by that it comprises a second reference voltage generator (28), and protection circuit means (29) comprising at least a comparator circuit which compares a voltage related to said output regulated voltage with a voltage related to the reference voltage produced by said second voltage generator.

2. A power supply as claimed in claim 1 comprising further circuit means for changing selectively in excess or in defect relative to a nominal reference voltage the voltage produced by said first generator.

FIG. 1

1/3

0024661

FIG. 2

2/3

0024661

FIG. 3

| | European Patent Office | EUROPEAN SEARCH REPORT | Application number EP 80 10 4870 |
|---|---|---|---|

## DOCUMENTS CONSIDERED TO BE RELEVANT

| Category | Citation of document with indication, where appropriate, of relevant passages | Relevant to claim |
|---|---|---|
| | ELECTRICAL DESIGN NEWS, vol. 14, no. 11, 1st June 1969, pages 54-59<br>Denver, U.S.A.<br>R H. CUSHMAN: "Power-supply over-voltage protection"<br><br>  * Page 57, left-hand column, line 13 - page 59, left-hand column, line 36; figures 3,4 *<br><br>-- | 1,2 |
| | FR - A - 2 243 542 (FRAKO)<br><br>  * Page 3, line 28 - page 4, line 7; figure 1; page 4, line 14 - page 5, line 24; figure 3 *<br><br>-- | 1 |
| | ELECTRONIQUE & MICROELECTRONIQUE INDUSTRIELLES, no. 162, 15th October 1972, pages 57-60<br>Paris, FR.<br>C. BOISARD: "Un CI régulateur de vitesse pour moteur à courant continu à aimant permanent"<br><br>  * Figures 4,5 *<br><br>-- | 2 |
| | ELECTRONICS, vol. 50, 21st July 1977, page 125<br>New York, U.S.A.<br>C. VISWANATH: "D-a converter controls programmable power source"<br><br>  * Whole document *<br><br>-- | 2 |
| | US - A - 3 577 064 (NERCESSIAN)<br><br>  * Column 2, line 35 - column 3, line 7; figure 1 *<br><br>--    ./. | 2 |

**CLASSIFICATION OF THE APPLICATION (Int Cl.³)**

G 05 F 1/64

**TECHNICAL FIELDS SEARCHED (Int. Cl.³)**

G 05 F 1/64
1/56

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 25-11-1980 | RUGGIU |

EPO Form 1503.1 06.78

European Patent Office

2

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | FR - A - 2 425 760 (MAMON) <br> * Page 6, lines 12-40; figure 5 * <br><br> ---- | 2 | |
| | | | TECHNICAL FIELDS SEARCHED (Int. Cl. 3) |